# EUROPEAN PATENT SPECIFICATION

(11) **EP 1 204 461 B1**
(45) Date of publication and mention of the grant of the patent: **14.04.2004**
(21) Application number: 00950072.9
(22) Date of filing: 24.07.2000
(51) Int. Cl.: B01D 63/02, B01D 61/18

(54) **FILTERING DEVICE COMPRISING A CYLINDRICAL FIRST FILTER AROUND A FILTRATION MEMBRANE MODULE**
FILTERVORRICHTUNG MIT EINEM ZYLINDRISCHEN ERSTEN FILTER UM EINE MEMBRANFILTEREINHEIT
DISPOSITIF DE FILTRAGE COMPORTANT UN PREMIER FILTRE CYLINDRIQUE DISPOSE AUTOUR D'UN MODULE DE FILTRATION A MEMBRANE

(30) Priority: 27.07.1999 NL 1012715
(43) Date of publication of application: 15.05.2002
(73) Proprietor: Prime Water Systems GmbH, 48455 Bad Bentheim (DE)
(72) Inventor: SCHARSTUHL, Johan, Jan, NL-7495 TC Ambt Delden (NL); SCHARSTUHL, Eric, NL-7542 GD Enschede (NL)
(74) Representative: Kupecz, A., Drs. c.s.
(86) International application number: PCT/NL2000/000524
(87) International publication number: WO 2001/007151

(56) References cited:
- EP-A- 0 392 726
- EP-A- 0 617 951
- WO-A-91/05600
- US-A- 4 636 307
- US-A- 5 102 542
- PATENT ABSTRACTS OF JAPAN vol. 1997, no. 10, 31 October 1997 (1997-10-31) -& JP 09 150043 A (NOK CORP), 10 June 1997 (1997-06-10) -& DATABASE WPI Section Ch, Derwent Publications Ltd., London, GB; Class D15, AN 1998-254292 XP002136063
- PATENT ABSTRACTS OF JAPAN vol. 1996, no. 07, 31 July 1996 (1996-07-31) -& JP 08 071541 A (SANYO ELECTRIC CO LTD;TOTTORI SANYO ELECTRIC CO LTD), 19 March 1996 (1996-03-19) -& DATABASE WPI Section Ch, Derwent Publications Ltd., London, GB; Class D15, AN 1996-203771 XP002136064
- PATENT ABSTRACTS OF JAPAN vol. 1996, no. 09, 30 September 1996 (1996-09-30) -& JP 08 117764 A (ZOJIRUSHI CORP), 14 May 1996 (1996-05-14) -& DATABASE WPI Section Ch, Derwent Publications Ltd., London, GB; Class D15, AN 1996-281498 XP002136065

## Description

The invention relates to a filtering device, comprising an inlet and an outlet connection, a substantially cylindrical first filter connected with the inlet connection, which first filter comprises a cavity extending along its cylinder axis, and a filtration membrane module connected with the outlet connection, which is at least partially accommodated in the cavity of the first filter, the first filter and the filtration membrane module being connected in series and comprising a bundle of capillary hydrophilic filtration membranes whose open ends connect to the outlet connection.

A similar filtering device is known from WO 91/05600 A (Cuno Inc.) 2 May 1991 (1991-05-02).

Such a filter is known from the American patent publication US-A-4,636,307. The known filter comprises a casing having an inlet and an outlet connection. In the interior of said casing a substantially cylindrical body is applied comprising an adsorbent, which cylindrical body with adsorbent constitutes the first filter. The topside of this body has an inlet for a liquid to be filtered. The body is provided with a hollow core above a lowest part of the body, while the top portion of this lowest part defining the bottom of the core is provided with an outlet for the liquid. An exterior and interior cylinder mantle of this body, defining the outside of the first filter and the hollow core, respectively, are liquid-impermeable. The adsorbent is provided between the two cylinder mantles and in the lower portion, and when in use, the liquid to be filtered flows through this. The filtration membrane module having capillary filtration membranes is applied in the hollow core. Subsequent to the liquid having passed through the outlet of the first filter, it will penetrate the wall of the capillary filtration membranes, thereby undergoing a subsequent filtration step. The capillary filtration membranes possess an open end through which the filtered liquid is able to reach the outlet connection of the filtering device. The drawback of the prior art filtering device is that the liquid has to travel a long way through the first filter and that an inlet and outlet have only a limited capacity. This results in a considerable pressure difference over the first filter in order for the filtering device to realize an adequate delivery, and this prevents of finding a general application for such a filter.

It is the object of the invention to remove the above-cited drawbacks of the prior art filtering device. To this end the invention provides a filtering device of the kind mentioned in the preamble, characterized in that said membranes contain at least one hydrophobic membrane and said first filter comprises said activated carbon as a block and said capillary membranes are hydrophilic, the exterior cylinder mantle of the first filter forms an inlet, and the interior mantle of the first filter enclosing the cavity surrounding the cylinder axis, forms an outlet for the first filter. The liquid to be filtered can thus flow in a direction perpendicular to the cylinder axis which, at an equal quantity of adsorbent, will result in a much shorter flow path. Using the same quantity of adsorbent as in the prior art filtering device ensures that the adsorption capacity remains the same. As the flow resistance in the configuration of the filtering device according to the invention is considerably reduced, it is also possible to opt for a larger amount of adsorbent, so that the adsorption capacity will be increased. A further advantage of the configuration of the filtering device according to the invention is that it is more simply constructed and thus can be manufactured at lower costs.

In an efficiently realizable preferred embodiment of the filtering device according to the invention, the cavity extends through the first filter.

A further embodiment of the filtering device according to the invention, wherein the first filter comprises activated charcoal, is characterized in that the first filter comprises a block of activated charcoal. This ensures that the first filter possesses a considerable retention or adsorption capacity. Filtration is also more effective than with the granulated activated charcoal usually applied, because owing to surface contact the liquid to be filtered cannot flow between the granules of the granulate without being filtered. The liquid is forced to flow through the activated charcoal. The block may also be used in the filtering device as a self-supporting unit so that a body for containing, for example, granulated material, becomes superfluous.

Preferably, the block of activated charcoal is formed by moulding. There will in that case be no granule boundaries inside the block as would be the case with a compressed block of activated charcoal. Such granule boundaries reduce the effectiveness of the block. Further favourable properties of such a moulded block are that it sheds few or no fibres that might clog the filter membranes, and that it provides an extremely effective preliminary filtration up to approximately 0.5 µm. Subsequently a further filtration up to approximately 0.1 µm is possible with the aid of the capillary filtration membranes, that may take the form of micro- or ultrafiltration membranes. Due to an effective preliminary filtration with the aid of a moulded block of activated charcoal, the membranes will become clogged less quickly. A further advantage of such a moulded block is that the flow resistance, and consequently the pressure drop over the block, will be reduced.

When the liquid to be filtered is polluted more seriously with relatively large particles, the first filter in a preferred embodiment of the filtering device comprises a first filtration stage provided around the block of activated charcoal, forming a supplementary filtration stage for the block of activated charcoal in order to prevent the block of activated charcoal becoming clogged and to significantly extend the life of the filtering device.

In an embodiment that is easy to realize and efficient, the first filtration stage is formed by a felt-like filter folded in concertina fashion around the block of activated charcoal, with the folds disposed parallel to the cylinder axis. In such a first filtering stage, the strips formed by the folding possess a large filtering surface with an extremely large filtration capacity.

In an embodiment wherein the filtration membrane module comprises a module housing surrounding the capillary membranes, the module housing preferably comprises a perforated tube. Via the perforations provided in the module housing, the liquid filtered by the first filter and discharged from the interior wall of the first filter, will quickly reach the capillary membranes for a quickest possible passage through the filtering device.

In order to avoid the flow of liquid from the interior wall of the first filter being obstructed, the module housing in a preferred embodiment of the filtering device is positioned substantially free from the interior mantle surrounding the cavity of the first filter.

Conform a preferred embodiment according to the invention, the filtration membrane module is provided with hydrophilic capillary membranes.

Hereinbelow the invention will the illustrated with reference to the appended drawing in which identical or similar parts carry the same reference numbers, and in which
- Figure 1, shows a longitudinal cross section through an embodiment of the filtering device according to the invention;
- Figure 2, shows an enlarged top view of the longitudinal cross section of Figure 1; and
- Figure 3, shows a cross section through the filtering device according to Figure 1.

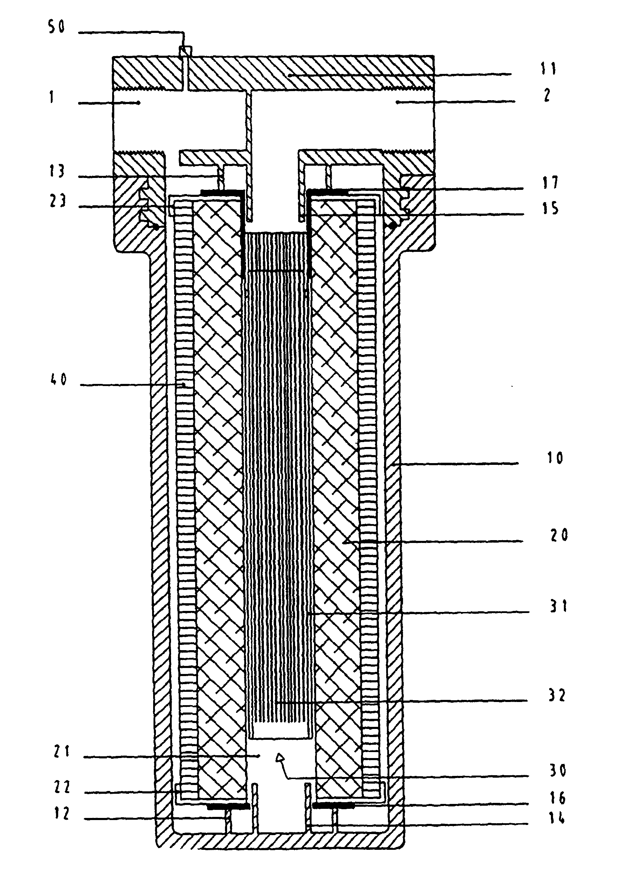

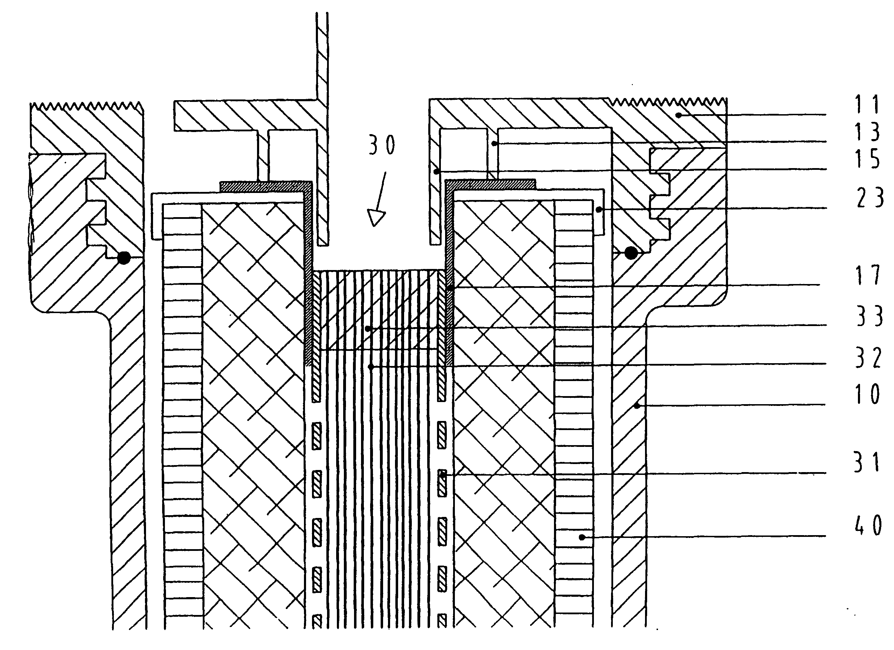

The filtering device according to the invention shown in the figures comprises a housing in the form of a beaker 10 with a screw cover 11. Between the cover 11 and the beaker 10 an O-ring (not indicated, but visible in the Figures 1 and 2) is provided for sealing. The cover 11 is provided with an inlet connection 1 and an outlet connection 2. Inside the beaker 10 a cylindrical block of activated charcoal 20 is provided as part of a first filter. The block of activated charcoal 20 is formed by moulding and constitutes a self-supporting unit which is only at the top and bottom provided with reinforcement 22, 23. Such a moulded block of activated charcoal 20 is, for example, a "C-236 series moulded block filter cartridge" available from Fibredyne, at Dover, New Hampshire, U.S.A. The bottom of the block 20 rests with a reinforcement 22 on a sealing rim 12 between which a packing sealing 16 is provided. A packing sealing 17 is also provided at the top, between the top reinforcement 23 of the block 20 and the sealing rim 13.

Along its cylinder axis the cylindrical block of activated charcoal 20 is provided with a hollow core 21. Into said hollow core 21 a centring boss 14 of the beaker 10 is inserted at the bottom and a centring boss 15 of the cover 11, is inserted at the top.

In the cylindrical hollow core 21, a filtration membrane module 30 is inserted. The module 30 comprises a perforated module mantle 31, in which a bundle of capillary filtration membranes 32 is applied. Depending on the application of the filtering device, the membranes 32 may be micro- or ultrafiltration membranes. At their bottom ends the capillary membranes 32 are sealed, and at the their top ends they are open. Further, the capillary membranes 32 are at their top ends embedded in a membrane holder 33 sealing the space between the module housing 31 and the capillary membranes 32. Such a filtration membrane module 30 is available, for example, from Prime Water Systems B.V., at Ambt-Delden, The Netherlands. The packing sealing 17 is further designed such that for sealing purposes this is also incorporated between the block of charcoal 20 and the top of the module housing 31 of the membrane module 30.

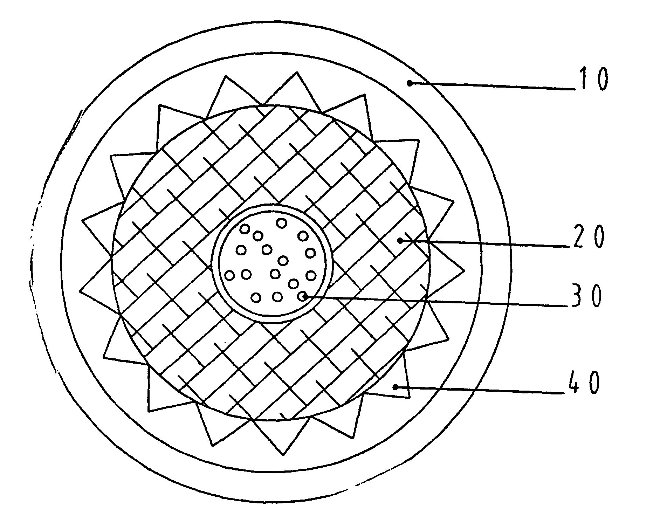

Around the block of activated charcoal 20 a felt-like filter 40 made of polyester fibre is provided, folded in concertina fashion, with the folds disposed parallel to the cylinder axis, as illustrated in Figure 3. Said filter 40 forms an initial filter stage of the first filter which in the embodiment shown in the figures consists of said filter 40 and the block of activated charcoal 20. The filter 40 is a supplementary filter stage for the block of activated charcoal 20 intended to remove particles that could cause the block of charcoal to become clogged 20 from the liquid to be filtered. Such a filter 40 is, for example, incorporated in a "801 series filter cartridge", available from Harmsco Industrial Filters at North Palm Beach, Florida, U.S.A.

After the cover 11 has been screwed off the beaker 10, the various parts of the filtering device can be easily and quickly removed for cleaning or replacement.

In use, the liquid to be filtered has to be introduced into the filtering device via the inlet connection 1. The liquid subsequently flows around the filter 40 which is folded in concertina fashion around the cylinder axis of the block of activated charcoal 20 inside the housing, which housing consists of the beaker 10, and the cover 11, and it will pass said filter 40 and via the cylindrical exterior mantle end up in the block of charcoal. By the shortest possible path the liquid can then pass perpendicularly to the cylinder axis to the interior mantle of the block of charcoal 20, and will end up in the hollow core 21 of the block of charcoal 20 and thus in the first filter. From the hollow core, via the perforations in the module housing 31 (not indicated, but visible in Figure 2) and via the open bottom end of the module housing 31 the liquid can reach the membranes 32, and subsequently penetrate through the membrane wall of the capillary filtration membranes 32 of the filtration membrane module 30. Finally, the liquid will leave the capillary membranes 32 via their open ends and via the outlet connection 2 of the filtering device.

In the embodiment shown, completely hydrophilic membranes 32 are employed. Possible air bubbles will not or hardly be able to pass through the membrane wall. However, the collecting air can diffuse via the block of activated charcoal 20 and the filter 40 to the exterior of the filter, after which the air can leave the filtering device via a conventional vent connection 50. If an at least partially hydrophobic membrane is employed, air bubbles are able to escape via this hydrophobic portion to the outlet connection. However, such hydrophobic membranes reduce the filtering capacity of the filtration membrane module, and at higher pressure differences, may allow penetration of bacteria. If, as in the present invention, a block of activated charcoal 20 and a filter 40 are used as first filter, air collecting in the hollow core 21 can easily escape via the block 28 and the filter 40 to the vent 50, and extremely hydrophilic membranes 32 with a high permeability for the liquid to be filtered may be used in the filtering device.

The embodiment of the filtering device described above must not be understood as limiting the invention. The filtering device may be realized in various embodiments within the scope of the invention and the appended claims.

## Claims

1. A filtering device, comprising an inlet and an outlet connection, a substantially cylindrical first filter connected with the inlet connection, which first filter comprises a cavity extending along its cylinder axis, and a filtration membrane module connected with the outlet connection, which is at least partially accommodated in the cavity of the first filter which comprises activated carbon, the first filter and the filtration membrane module being connected in series and comprising a bundle of hydrophilic capillary filtration membranes whose open ends connect to the outlet connection, **characterized in that** said membranes contain at least one hydrophobic membrane and said first filter comprises said activated carbon as a block and said capillary membranes are hydrophilic, the exterior cylinder mantle of the first filter (20,40) forms an inlet, and the interior mantle of the first filter (20,40) enclosing the cavity (21) surrounding the cylinder axis, forms an outlet for the first filter (20,40).

2. A filtering device according to claim 1, **characterized in that** the cavity (21) extends through the first filter (20,40).

3. A filtering device according to claim 1 or 2, wherein the first filter comprises activated charcoal, **characterized in that** the first filter (20,40) comprises a block of activated charcoal (20).

4. A filtering device according to claim 3, **characterized in that** the block of activated charcoal (20) is formed by moulding.

5. A filtering device according to claim 3 or 4, **characterized in that** the first filter (20,40) comprises a first filtration stage (40) provided around the block of activated charcoal (20), forming a supplementary filtration stage for the block of activated charcoal (20).

6. A filtering device according to claim 5, **characterized in that** the first filtration stage (40) is formed by a felt-like filter (40) folded in concertina fashion around the block of activated charcoal (20), with the folds disposed parallel to the cylinder axis.

7. A filtering device according to one of the preceding claims, **characterized in that** the module housing (31) comprises a perforated tube (31).

8. A filtering device according to claim 7, **characterized in that** the module housing (31) is positioned substantially free from the interior mantle surrounding the cavity (21) of the first filter (20,40).

## Patentansprüche

1. Filtervorrichtung mit einem Einlaß- und einem Auslaßanschluss, einem mit dem Einlaßanschluss verbundenen ersten im Wesentlichen zylindrischen Filter, wobei der erste Filter einen Hohlraum aufweist, der sich längs seiner Zylinderachse erstreckt, und mit einer mit dem Auslaßanschluss verbundenen Membranfiltereinheit, welche mindestens teilweise in dem Hohlraum des ersten Filters, welcher Aktivkohle beinhaltet, aufgenommen ist, wobei der erste Filter und die Membranfiltereinheit in Serie verbunden sind und ein Bündel von hydrophilen Kapillar-Filtermembranen aufweisen, deren offene Enden mit dem Auslaßanschluss in Verbindung stehen, **dadurch gekennzeichnet, dass** die Membranen mindestens eine hydropile Membran enthalten, und dass der erste Filter die Aktivkohle als einen Block enthält, und dass die Kapillar-Membranen hydrophil sind, dass der äußere Zylindermantel des ersten Filters (20, 40) einen Einlauf bildet, und dass der innere Mantel des ersten Filters (20, 40), der den Hohlraum (21) einschließt, indem er die Zylinderachse umgibt, einen Auslaß für den ersten Filter (20, 40) bildet.

2. Filtervorrichtung nach Anspruch 1, **dadurch gekennzeichnet, dass** sich der Hohlraum (21) durch den ersten Filter (20, 40) erstreckt.

3. Filtervorrichtung nach Anspruch 1 oder 2, wobei der erste Filter Aktivkohle beinhaltet, **dadurch gekennzeichnet, dass** der erste Filter (20, 40) einen Block aus Aktivkohle aufweist (20).

4. Filtervorrichtung nach Anspruch 3, **dadurch gekennzeichnet, dass** der Block aus Aktivkohle (20) durch Formen gebildet ist.

5. Filtervorrichtung nach Anspruch 3 oder 4, **dadurch gekennzeichnet, dass** der erste Filter (20, 40) eine erste Filterstufe (40) aufweist, welche um den Block aus Aktivkohle (20) herum angeordnet ist, wobei sie eine ergänzende Filterstufe für den Block aus Aktivkohle (20) bildet.

6. Filtervorrichtung nach Anspruch 5, **dadurch gekennzeichnet, dass** die erste Filterstufe (40) aus einem filzartigen Filter (40) gebildet wird, welcher um den Block aus Aktivkohle (20) herum nach Art einer Ziehharmonika gefaltet ist, wobei die Falten parallel zu der Zylinderachse angeordnet sind.

7. Filtervorrichtung nach einem der vorhergehenden Ansprüche, **dadurch gekennzeichnet, dass** das Gehäuse (31) der Einheit ein perforiertes Rohr (31) aufweist.

8. Filtervorrichtung nach Anspruch 7, **dadurch gekennzeichnet, dass** das Gehäuse (31) der Einheit im Wesentlichen frei von dem inneren, den Hohlraum (21) des ersten Filters (20, 40) umgebenden Mantel angeordnet ist.

## Revendications

1. Dispositif de filtration comprenant une connection d'entrée et une connection de sortie, un premier filtre essentiellement cylindrique connecté à la connection d'entrée, dont le premier filtre comporte une cavité s'étendant le long de son axe cylindrique et un module de membrane de filtration connecté à la connection de sortie, qui est logé au moins partiellement dans la cavité du premier filtre qui contient du charbon activé, le premier filtre et le module de membrane de filtration étant connectés en série et comportant un faisceau de membranes de filtration capillaires, hydrophiles, dont les extrémités ouvertes se connectent à la connection de sortie
**caractérisé en ce que**
les dites membranes contiennent au moins une membrane hydrophobe **en ce que** le dit premier filtre contient le dit charbon activé sous forme d'un bloc **en ce que** les dites membranes capillaires sont hydrophiles, l'enveloppe extérieure du cylindre du premier filtre (20,40) forme une entrée et l'enveloppe intérieure du premier filtre (20,40) incluant la cavité (21) entourant l'axe du cylindre, forme une sortie pour le premier filtre (20,40)

2. Un dispositif de filtration selon à la revendication 1,
**caractérisé en ce que** la cavité (21) s'étend à travers le premier filtre (20,40)

3. Un dispositif de filtration selon la revendication 1 ou 2, dans lequel le premier filtre contient du charbon activé
**caractérisé en ce que** le premier filtre (20,40) contient un bloc de charbon activé (20)

4. Un dispositif de filtration selon la revendication 3
**caractérisé en ce que**
le bloc de charbon activé (20) est formé par moulage

5. Un dispositif de filtration selon la revendication 3 ou la revendication 4,
**caractérisé en ce que** le premier filtre (20,40) contient un premier étage de filtration (40) disposé tout autour du bloc de charbon activé (20) formant un étage de filtration supplémentaire pour le bloc de charbon activé (20).

6. Un dispositif de filtration selon la revendication 5,
**caractérisé en ce que** le premier étage de filtration (40) est formé d'un filtre du type feutre (40) plié d'une manière en accordéon, tout autour du bloc de charbon activé (20) ayant des plis disposés parallèlement à l'axe du cylindre.

7. Un dispositif de filtration selon l'une des revendications précédentes
**caractérisé en ce que**
le logement du module (31) comprend un tube perforé (31)

8. Un dispositif de filtration selon la revendication 7,
**caractérisé en ce que**
le logement du module (31) est disposé essentiellement dégagé de l'enveloppe intérieure entourant la cavité (21) du premier filtre (20,40).
